# EUROPEAN PATENT APPLICATION

(11) **EP 4 769 708 A2**
(43) Date of publication of application: **01.07.2026**
(21) Application number: 26173003.0
(22) Date of filing: 03.03.2021
(51) Int. Cl.: H01M 50/209

(54) **ENERGY STORAGE APPARATUS**

(30) Priority: 18.03.2020 JP 2020048041; 18.03.2020 JP 2020048061
(62) Divisional of application: 21771213.2
(71) Applicant: GS Yuasa International Ltd., Kisshoin, Minami-ku, Kyoto-shi, Kyoto 601-8520 (JP)
(72) Inventor: IWASHIMA, Yasuyuki, Kyoto-shi, 6018520 (JP); SASAKI, Shun, Kyoto-shi, 6018520 (JP)
(74) Representative: Grünecker Patent- und Rechtsanwälte PartG mbB

(57) **Abstract**

An energy storage apparatus (10) includes: an energy storage device (210) including an electrode assembly in which plates are laminated; a pair of end plates (400) disposed at a position sandwiching the energy storage device (210) in a layering direction of the plates; and a side plate (500) connecting the pair of end plates (400). At least one end plate (400) of the pair of end plates (400) includes: a second plate portion (412) opposed to a first direction (X-axis direction); and an extension member (430) that is attached to the second plate portion (412) to extend the second plate portion (412) in a second direction (Y-axis direction) intersecting with the first direction, the extension member (430) being connected to the side plate (500) in the first direction.

## Description

### TECHNICAL FIELD

The present invention relates to an energy storage apparatus including an energy storage device.

### BACKGROUND ART

Conventionally, an energy storage apparatus including an energy storage device, an end plate, and a side plate is known. Patent Document 1 discloses a battery pack (energy storage apparatus) including a plurality of battery cells (energy storage devices), the side plate extended along an arrangement direction of the battery cells, and the end plate connected to the side plate.

Conventionally, the energy storage apparatus including the energy storage device and a spacer is known. Patent Document 2 discloses the energy storage apparatus including a plurality of energy storage devices, an adjacent member (spacer) disposed between the plurality of energy storage devices, and a pair of coupling members (side plates) extended in the arrangement direction of the energy storage devices and coupled to a pair of terminal members. In order to insulate the respective energy storage devices from each other or to insulate the coupling member and the energy storage devices from each other, an insulating insulator extending along the arrangement direction is disposed between the coupling member and the energy storage device.

### PRIOR ART DOCUMENTS

### PATENT DOCUMENTS

Patent Document 1: JP-A-2015-56399
Patent Document 2: JP-A-2019-032998

### SUMMARY OF THE INVENTION

### PROBLEMS TO BE SOLVED BY THE INVENTION

In the conventional energy storage apparatus disclosed in Patent Document 1, sometimes the end plate and the side plate cannot be easily connected to each other. A first object of the present invention is to provide an energy storage apparatus capable of easily connecting the end plate and the side plate.

In the conventional energy storage apparatus as disclosed in Patent Document 2, the insulator causes an increase in size of the apparatus itself. A second object of the present invention is to provide an energy storage apparatus that can easily prevent the increase in size.

### MEANS FOR SOLVING THE PROBLEMS

In order to achieve the first object, an energy storage apparatus according to one aspect of the present invention includes: an energy storage device including an electrode assembly in which plates are laminated; a pair of end plates disposed at a position sandwiching the energy storage device in a layering direction of the plates; and a side plate connecting the pair of end plates. At least one end plate of the pair of end plates includes: a plate portion opposed to a first direction; and an extension member that is attached to the plate portion to extend the plate portion in a second direction intersecting with the first direction, the extension member being connected to the side plate in the first direction.

The present invention can be implemented not only as such the energy storage apparatus but also as the end plate or a combination of the end plate and the side plate.

In order to achieve the second object, an energy storage apparatus according to one aspect of the present invention includes: a plurality of energy storage devices arranged in a first direction; an insulating first spacer disposed between a pair of adjacent energy storage devices; an insulating second spacer disposed at a position where one of the pair of energy storage devices is sandwiched between the second spacer and the first spacer; and an insulating third spacer disposed at a position where the other of the pair of energy storage devices is sandwiched between the third spacer and the first spacer. The second spacer includes a second wall that covers an outside surface along the first direction in the one energy storage device, the third spacer includes a third wall that covers the outside surface along the first direction in the one energy storage device, the first spacer includes: a body disposed between the pair of energy storage devices; and a first wall that is provided at an end in a second direction intersecting the first direction in the body and extends along the first direction, and the first wall includes a first overlapping portion overlapping with the second wall and a second overlapping portion that is provided on a side opposite to the first overlapping portion in the body and overlaps with the third wall.

### ADVANTAGES OF THE INVENTION

According to the energy storage apparatus of the present invention, the end plate and the side plate can be easily connected to each other, or the increase in size of the energy storage apparatus can be prevented.

### BRIEF DESCRIPTION OF THE DRAWINGS

Fig. 1 is a perspective view illustrating an appearance of an energy storage apparatus according to an embodiment.
Fig. 2 is an exploded perspective view illustrating each component when the energy storage apparatus of the embodiment is disassembled.
Fig. 3 is an exploded perspective view illustrating each component when the energy storage apparatus of the embodiment is further disassembled.
Fig. 4 is a perspective view illustrating a configuration of an end plate of the embodiment.
Fig. 5 is a perspective view illustrating a configuration of a side plate of the embodiment.
Fig. 6 is a perspective view and a side view illustrating a configuration when the side plate is connected to the end plate of the embodiment.
Fig. 7 is a top view illustrating a configuration when the side plate is connected to the end plate of the embodiment.
Fig. 8 is a perspective view illustrating an appearance of a first spacer of the embodiment.
Fig. 9 is a perspective view illustrating an appearance of a second spacer of the embodiment.
Fig. 10 is a perspective view illustrating an appearance of a third spacer of the embodiment.
Fig. 11 is a perspective view illustrating a state in which the spacers of the embodiment are mounted on a plurality of energy storage devices.
Fig. 12 is a top view illustrating a part of a state in which the spacers of the embodiment are mounted on the plurality of energy storage devices.

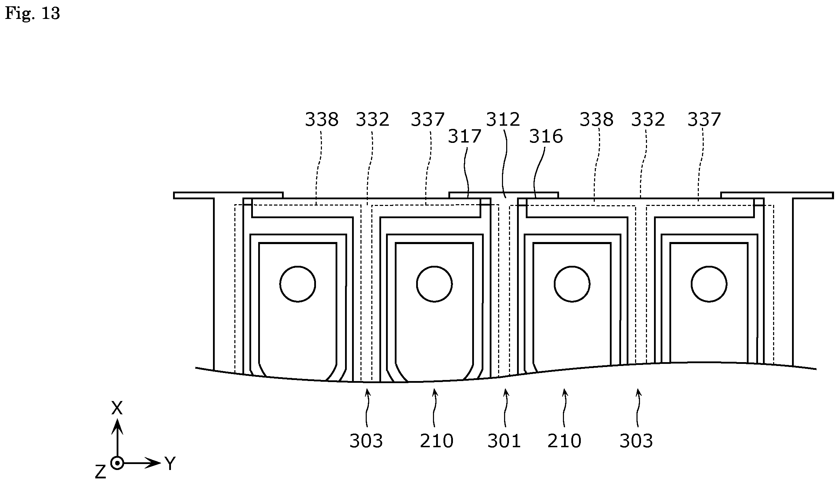

Fig. 13 is a schematic view illustrating an arrangement example of the first spacer and the third spacer according to a modification.

### MODE FOR CARRYING OUT THE INVENTION

In the conventional energy storage apparatus disclosed in Patent Document 1, sometimes the end plate and the side plate cannot be easily connected to each other. That is, in the conventional energy storage apparatus having the configuration as described above, the end plate is preferably formed of a member having high strength. However, when the end plate is formed of the member having high strength, it is sometimes difficult to form a connecting member with the side plate on the end plate. In such the case, the end plate and the side plate cannot be easily connected. A first object of the present invention is to provide an energy storage apparatus capable of easily connecting the end plate and the side plate.

In order to achieve the first object, an energy storage apparatus according to one aspect of the present invention includes: an energy storage device including an electrode assembly in which plates are laminated; a pair of end plates disposed at a position sandwiching the energy storage device in a layering direction of the plates; and a side plate connecting the pair of end plates. At least one end plate of the pair of end plates includes: a plate portion opposed to a first direction; and an extension member that is attached to the plate portion to extend the plate portion in a second direction intersecting with the first direction, the extension member being connected to the side plate in the first direction.

Thus, in the energy storage apparatus, the end plate includes an extension member that is attached to the plate portion opposite to each other in the first direction to extend the plate portion in the second direction, the extension member being connected to the side plate in the first direction. In this manner, the extension member is attached to the plate portion of the end plate, and the side plate is connected to the extension member. Accordingly, even when it is difficult to form a connecting member with the side plate in the plate portion due to formation of the plate portion of the end plate with a high-strength member or the like, the end plate and the side plate can be easily connected by connecting the side plate to the extension member. Because the plate portion can be formed of a high-strength member, the thickness of the plate portion is not required to be increased in order to secure the strength of the plate portion. Accordingly, in the energy storage apparatus, the width in the thickness direction (first direction) of the plate portion can be reduced, so that space saving can be implemented. As described above, in the energy storage apparatus, the end plate and the side plate can be easily connected to each other while the space saving is implemented.

The side plate may be connected to the extension member without overlapping the plate portion in the first direction.

Thus, the side plate is connected to the extension member without being overlapped with the plate portion of the end plate in the first direction. In this manner, the side plate does not overlap the plate portion in the first direction, the increase in the width of the energy storage apparatus in the first direction can be prevented due to the side plate overlapping with the plate portion. Accordingly, in the energy storage apparatus, the end plate and the side plate can be easily connected to each other while the space saving is implemented.

The extension member may have a thickness smaller than a thickness of the plate portion in the first direction.

Thus, in the end plate, the extension member is formed to have a smaller thickness in the first direction than that of the plate portion. As described above, the extension member has a smaller thickness in the first direction than that in the plate portion, so that the side plate can be connected to a place where the end plate has the smaller thickness. Thus, in the energy storage apparatus, the width in the first direction can be formed small, so that the end plate and the side plate can be easily connected to each other while the space saving is implemented.

The extension member may have at least one of rigidity and tensile strength lower than those of the plate portion.

Thus, in the end plate, the extension member is formed to have at least one of rigidity and tensile strength lower than those of the plate portion. As described above, the extension member has at least one of the rigidity and the tensile strength lower than those of the plate portion, so that the member connected to the side plate can be formed more easily than the plate portion. The extension member may be formed with a lower strength than the plate portion, so that the thickness in the first direction can be formed smaller than that of the plate portion. With such the configuration, the side plate can be connected to the end plate at a portion where the thickness of the end plate is small, so that a width of the energy storage apparatus can be formed small in the first direction in the energy storage apparatus. Accordingly, in the energy storage apparatus, the end plate and the side plate can be easily connected to each other while the space saving is implemented.

The extension member may be attached to the plate portion without overlapping with the plate portion in the second direction.

Accordingly, in the end plate, the extension member is attached to the plate portion without overlapping with the plate portion in the second direction. In this manner, the extension member is not overlapped with the plate portion in the second direction, so that the length in the second direction can be formed small in the energy storage apparatus. Accordingly, in the energy storage apparatus, the end plate and the side plate can be easily connected to each other while the space saving is implemented.

In the conventional energy storage apparatus as disclosed in Patent Document 2, the insulator causes an increase in size of the apparatus itself. A second object of the present invention is to provide an energy storage apparatus that can easily prevent the increase in size.

In order to achieve the second object, an energy storage apparatus according to one aspect of the present invention includes: a plurality of energy storage devices arranged in a first direction; an insulating first spacer disposed between a pair of adjacent energy storage devices; an insulating second spacer disposed at a position where one of the pair of energy storage devices is sandwiched between the second spacer and the first spacer; and an insulating third spacer disposed at a position where the other of the pair of energy storage devices is sandwiched between the third spacer and the first spacer. The second spacer includes a second wall that covers an outside surface along the first direction in the one energy storage device, the third spacer includes a third wall that covers the outside surface along the first direction in the one energy storage device, the first spacer includes: a body disposed between the pair of energy storage devices; and a first wall that is provided at an end in a second direction intersecting the first direction in the body and extends along the first direction, and the first wall includes a first overlapping portion overlapping with the second wall and a second overlapping portion that is provided on a side opposite to the first overlapping portion in the body and overlaps with the third wall.

Thus, the first overlapping portion of the first spacer overlaps with the second wall of the second spacer and the second overlapping portion overlaps with the third wall of the third spacer, so that a space between a pair of energy storage devices disposed adjacently to each other can be covered by the first overlapping portion and the second overlapping portion of the first wall, the second wall, and the third wall. Accordingly, the insulation between the pair of adjacent energy storage devices can be ensured without providing a dedicated member ensuring the insulation between the energy storage devices such as an insulator. Accordingly, the number of components can be reduced, and the increase in size of the energy storage apparatus can be prevented.

The first overlapping portion and the second overlapping portion may be disposed outside the second wall and the third wall.

Thus, the first overlapping portion and the second overlapping portion are disposed outside the second wall and the third wall, so that the second wall and the third wall can be disposed close to the energy storage device. In the space formed by bringing the second wall and the third wall close to the energy storage device, other members (fastening portions between the side plate and the end plate and the like) can be disposed. Accordingly, the second spacer or the third spacer and other members can be densely disposed, so that the increase in size of the energy storage apparatus can be prevented.

Thus, the overall outer surface shape of the first wall, the second wall, and the third wall may be the uneven shape in which the first wall forms the protrusion while the second wall and the third wall form the recess has been exemplified.

Thus, the overall outer surface shape of the first wall, the second wall, and the third wall is an uneven shape in which the first wall forms the protrusion and the second wall and the third wall form the recess, so that other members in the recess can be accommodated while the creeping distance is secured. Accordingly, each spacer and other members can be densely disposed, and the increase in size of the energy storage apparatus can be prevented.

The thickness of the first wall may be larger than each of the thickness of the second wall and the thickness of the third wall.

Thus, the thickness of the first wall is larger than the thickness of the second wall and the thickness of the third wall, so that the strength of the first wall can be enhanced. Accordingly, the first wall can be prevented from being damaged during the assembly.

The first wall, the second wall, and the third wall may cover the entire case of the energy storage device in a third direction intersecting the first direction and the second direction.

Thus, the first wall, the second wall and the third wall cover the whole case of the energy storage device in the third direction, so that a high insulation property can be ensured also in the third direction.

Hereinafter, an energy storage apparatus according to an embodiment (including a modification of the present invention) will be described with reference to the drawings. The embodiment described below illustrates a comprehensive or specific example. Numerical values, shapes, materials, components, dispositions and connection forms of the components, manufacturing processes, order of the manufacturing processes, and the like described in the following embodiment are merely examples, and are not intended to limit the present invention. In each of the drawings, dimensions and the like are not strictly illustrated.

In the following description and drawings, an alignment direction of a pair (a positive electrode side and a negative electrode side) of electrode terminals in one energy storage device, an opposing direction of a short side surface of the case of the energy storage device, or an alignment direction of a pair of side plates is defined as an X-axis direction. An arrangement direction of the plurality of energy storage devices, an opposing direction of long side surfaces of the cases of the energy storage devices, a layering direction of plates of the electrode assembly of the energy storage devices, or the alignment direction of the pair of end plates is defined as a Y-axis direction. The alignment direction of an outer case body and a lid of the energy storage apparatus, the alignment direction of the case body and the lid of the energy storage device, the alignment direction of the energy storage device and bus bar, or a vertical direction is defined as a Z-axis direction. The X-axis direction, the Y-axis direction, and the Z-axis direction are directions intersecting one another (orthogonal to one another in the embodiment). Although it may be conceivable that the Z-axis direction is not in the vertical direction depending on a mode of use, hereinafter the Z-axis direction is described as the vertical direction for convenience of explanation.

In the following description, an X-axis positive direction indicates an arrow direction side of the X-axis, and an X-axis negative direction indicates an opposite direction to the X-axis positive direction. The same applies to the Y-axis direction and the Z-axis direction. Hereinafter, the X-axis direction may also be referred to as a first direction, the Y-axis direction may also be referred to as a second direction, and the Z-axis direction may also be referred to as a third direction. An expression indicating a relative direction or a posture such as parallel and orthogonal strictly also includes the case where the expression is not the direction or the posture. For example, two directions orthogonal to each other means not only that the two directions are completely orthogonal to each other, but also that the two directions are substantially orthogonal to each other, namely, includes a difference of, for example, about several percent.

### (Embodiment)

### [1 General description of energy storage apparatus 10]

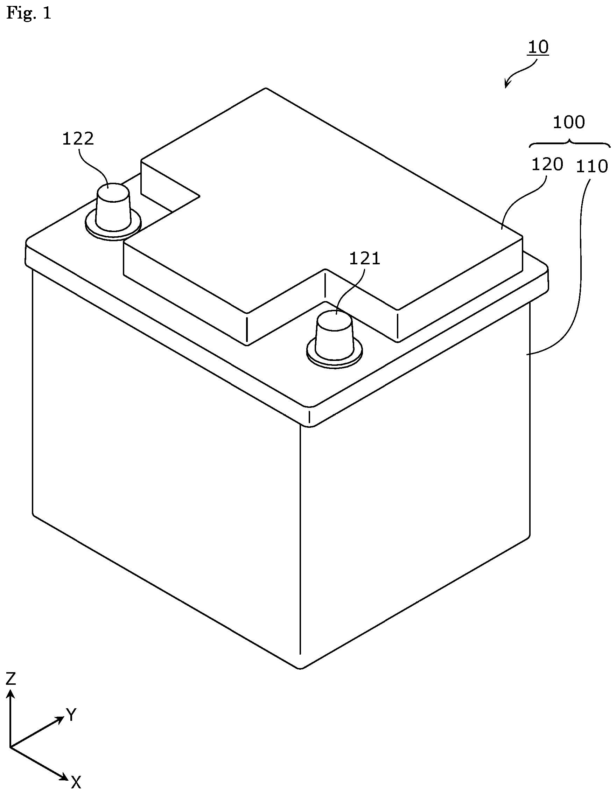

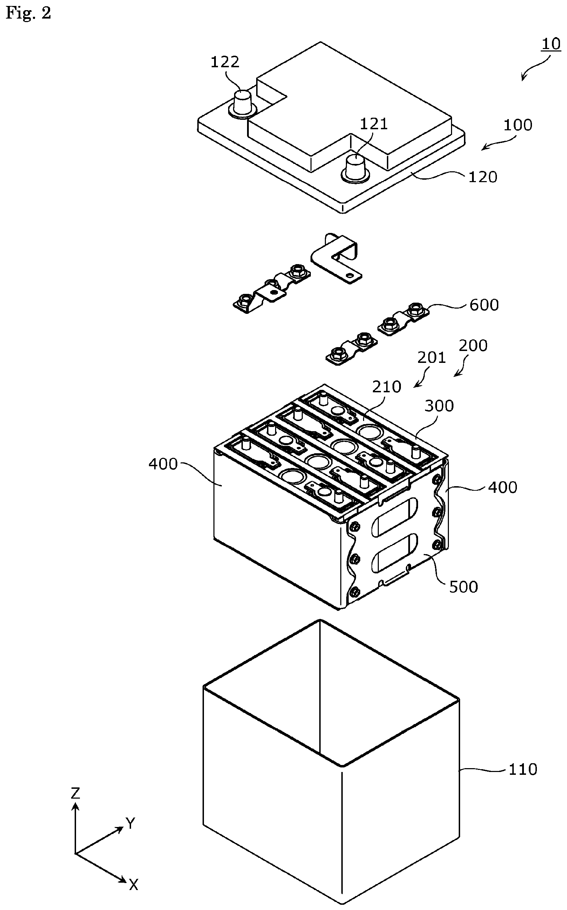

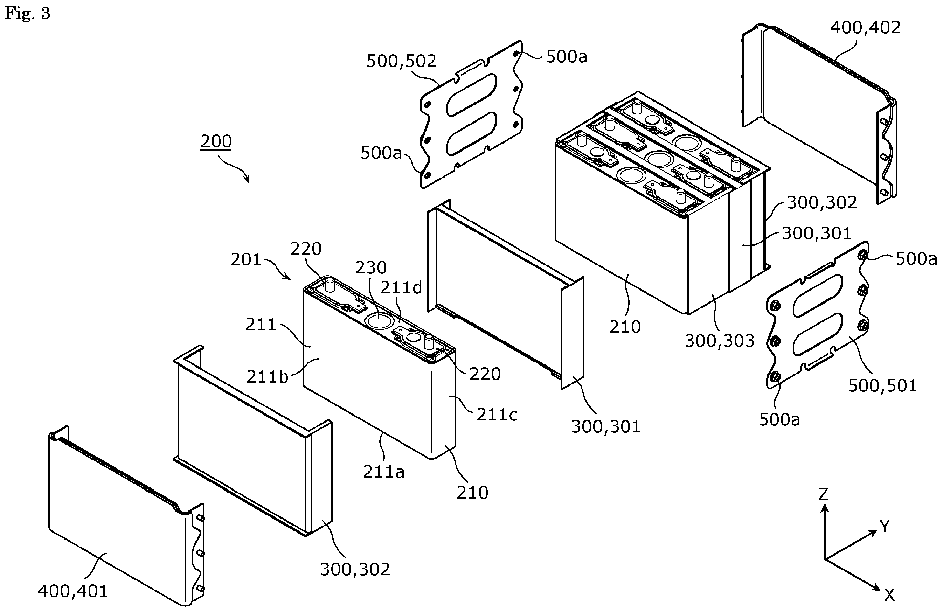

A general description of an energy storage apparatus 10 according to an embodiment will be given. Fig. 1 is a perspective view illustrating an appearance of the energy storage apparatus 10 of the embodiment. Fig. 2 is an exploded perspective view illustrating each component when the energy storage apparatus 10 of the embodiment is disassembled. Fig. 3 is an exploded perspective view illustrating each component when the energy storage apparatus 10 of the embodiment is further disassembled. Fig. 3 is an exploded perspective view illustrating components (energy storage units 200) of the energy storage apparatus 10 other than an outer case 100 and a bus bar 600.

The energy storage apparatus 10 is an apparatus capable of charging electricity from the outside and discharging electricity to the outside, and has a substantially rectangular parallelepiped shape in the embodiment. The energy storage apparatus 10 is a battery module (assembled battery) used for a power storage application, a power supply application, and the like. Specifically, for example, the energy storage apparatus 10 is used as a battery for driving a moving body such as automobiles, motorcycles, watercrafts, vessels, snowmobiles, agricultural machines, construction machines, and railway vehicles for electric railway or starting an engine. Examples of the automobiles include an electric vehicle (EV), a hybrid electric vehicle (HEV), a plug-in hybrid electric vehicle (PHEV), and a gasoline automobile. Examples of the railway vehicles for electric railway include a train, a monorail, and a linear motor car. The energy storage apparatus 10 can also be used as a stationary battery or the like used for home use, a generator, or the like.

As illustrated in Fig. 1, the energy storage apparatus 10 includes the outer case 100. As illustrated in Fig. 2, an energy storage unit 200 including an energy storage device array 201 formed of a plurality of energy storage devices 210, a plurality of bus bars 600 and the like are accommodated in an inside of the outer case 100. As illustrated in Fig. 3, the energy storage unit 200 includes the energy storage device array 201 in which the plurality of energy storage devices 210 are arranged, a plurality of spacers 300 (first spacer 301, second spacer 302, and third spacer 303), a pair of end plates 400 (401, 402), and a pair of side plates 500 (501, 502). The plurality of energy storage devices 210 are connected in series by the plurality of bus bars 600. In addition to the above-mentioned components, the energy storage apparatus 10 may include a bus bar frame on which the bus bars 600 are mounted, a circuit board monitoring a charged state and a discharged state of the energy storage devices 210, electric instruments such as fuses, relays and connectors, and an exhaust unit exhausting gas discharged from the energy storage devices 210 to the outside of the outer case 100.

The outer case 100 is a rectangular (substantially rectangular parallelepiped shape) case (module case) constituting the outer case of the energy storage apparatus 10. That is, the outer case 100 is disposed outside the plurality of energy storage devices 210, the plurality of spacers 300, the pair of end plates 400, the pair of side plates 500, the plurality of bus bars 600 and the like, fixes the energy storage devices 210 and the like at predetermined positions, and protects the energy storage devices from an impact or the like. The outer case 100 is formed of an insulating member such as polycarbonate (PC), polypropylene (PP), polyethylene (PE), polystyrene (PS), a polyphenylene sulfide resin (PPS), polyphenylene ether (PPE (including modified PPE)), polyethylene terephthalate (PET), polybutylene terephthalate (PBT), polyether ether ketone (PEEK), tetrafluoroethylene-perfluoroalkyl vinyl ether (PFA), polytetrafluoroethylene (PTFE), polyether sulfone (PES), an ABS resin, or a composite material thereof or an insulation-coated metal. This enables the outer case 100 to prevent the energy storage device 210 and the like from contacting with a metal member of the outside and the like. The outer case 100 may be formed by a conductive member such as metal as long as an electrical insulation property of the energy storage device 210 and the like are maintained.

The outer case 100 includes an outer case body 110 constituting a body of the outer case 100 and an outer case lid 120 constituting a lid of the outer case 100. The outer case body 110 is a bottomed rectangular cylindrical housing (casing) in which an opening is formed, and accommodates the energy storage device 210 and the like. The outer case lid 120 is a flat rectangular member that closes an opening of the outer case body 110. The outer case lid 120 is joined to the outer case body 110 by an adhesive, heat sealing, ultrasonic welding or the like. A positive electrode external terminal 121 and a negative electrode external terminal 122 are provided in the outer case lid 120. The positive electrode external terminal 121 is electrically connected to an electrode terminal 220 that is a total positive terminal of the energy storage unit 200. The negative electrode external terminal 122 is electrically connected to the electrode terminal 220 that is a total negative terminal of the energy storage unit 200. The energy storage apparatus 10 charges electricity from the outside and discharges electricity to the outside through the positive electrode external terminal 121 and the negative electrode external terminal 122.

The energy storage device 210 is a secondary battery (battery cell) that can charge and discharge the electricity, more specifically, is a nonaqueous electrolyte secondary battery such as a lithium ion secondary battery. The energy storage device 210 has a flat, rectangular parallelepiped (prismatic) shape. In the embodiment, four energy storage devices 210 are arrayed in the Y-axis direction. The four energy storage devices 210 form the energy storage device array 201. The size and shape of the energy storage devices 210 and the number of the arranged energy storage devices 210 are not limited, and only one energy storage device 210 may be arranged. The energy storage device 210 is not limited to a nonaqueous electrolyte secondary battery, but may be a secondary battery except for the nonaqueous electrolyte secondary battery or a capacitor. The energy storage device 210 is not the secondary battery, but may be a primary battery that can use stored electricity without being charged by a user. The energy storage device 210 may be a pouch type energy storage device.

Specifically, the energy storage device 210 includes a case 211 and a pair of (positive electrode side and negative electrode side) electrode terminals 220 (see Fig. 3). An electrode assembly, a pair of current collectors, an electrolyte solution (nonaqueous electrolyte), and the like are accommodated in the case 211, and a gasket is disposed between the case 211 and the electrode terminal 220 and the current collector, but these are not illustrated. A kind of the electrolyte solution is not particularly limited as long as performance of the energy storage device 210 is not impaired, and various kinds of electrolyte solutions can be selected. In addition to the above-described configuration, the energy storage device 210 may include a spacer disposed on a side or the like of the current collector, an insulating sheet that covers an outer surface of the case 211 and the like.

The case 211 is a rectangular parallelepiped (prismatic) case having a case body in which an opening is formed and a lid that closes the opening of the case body and forms a top surface 211d of the case 211, and is formed of metal such as stainless steel, aluminum, an aluminum alloy, iron, or a plated steel plate. In the embodiment, as illustrated in Fig. 3, the case 211 is disposed in a posture in which a long side surface 211b faces the Y-axis direction and a short side surface 211c faces the X-axis direction, namely, a posture in which a pair of long side surfaces 211b faces each other in the Y-axis direction and a pair of short side surfaces 211c faces each other in the X-axis direction. That is, the pair of long side surfaces 211b is parallel to the XZ-plane, and the pair of short side surfaces 211c is parallel to the YZ-plane. As described above, the pair of short side surfaces 211c are outside surfaces of the energy storage device 210 along the Y-axis direction (second direction).

A gas release valve 230 that releases pressure when the pressure in the case 211 increases is provided on the top surface 211d (lid) that is a surface in the Z-axis positive direction of the case 211 (see Fig. 3). That is, in the case 211, the gas release valve 230 is disposed at a position opposite to the bottom surface 211a that is a surface in the Z-axis positive direction of the case 211. An electrolyte solution filling portion that fills the inside of the case 211 with an electrolyte solution may be provided in the case 211.

The electrode terminal 220 is a terminal (a positive electrode terminal and a negative electrode terminal) of the energy storage device 210 disposed on the top surface 211d (lid) that is the surface in the Z-axis positive direction of the case 211, and is electrically connected to the positive electrode plate and the negative electrode plate of the electrode assembly through the current collector. That is, the electrode terminal 220 is a metal member that leads out electricity stored in the electrode assembly to a space outside the energy storage device 210 to introduce electricity into a space inside the energy storage device 210 in order to store electricity in the electrode assembly. The electrode terminal 220 is made of aluminum, an aluminum alloy, copper, a copper alloy, or the like.

The electrode assembly is an energy storage element (power generating element) formed by laminating the positive electrode plate, the negative electrode plate, and the separator. The positive electrode plate is obtained by forming a positive active material layer on a positive electrode substrate layer that is a current collecting foil made of metal such as aluminum or an aluminum alloy. The negative electrode plate is obtained by forming a negative active material layer on a negative electrode substrate layer that is a current collecting foil made of metal such as copper or a copper alloy. A known material can be appropriately used as the active material used for the positive active material layer and negative active material layer as long as the positive active material and the negative active material can store and release the lithium ion. In the embodiment, the electrode assembly is formed by laminating plates (the positive electrode plate and the negative electrode plate) in the Y-axis direction. For this reason, the Y-axis direction is also referred to as the layering direction. The electrode assembly may be an electrode assembly in any form such as a winding-type electrode assembly formed by winding plates (a positive electrode plate and a negative electrode plate), a laminating-type (stacking-type) electrode assembly formed by laminating a plurality of plate-shaped electrode plates, or a bellows-type electrode assembly formed by folding plates in a bellows shape. The winding-type electrode assembly includes a pair of curved portions curved in a semicircular shape or the like arranged in the X-axis direction or the Z-axis direction and a pair of flat portions that connect ends of the pair of curved portions and are arranged in the Y-axis direction, and the layering direction is a layering direction of the plates in the flat portions. The direction that the flat surface of the flat portion faces or the opposing direction of the pair of flat portions can also be defined as the layering direction.

The current collector is a conductive member (a positive electrode current collector and a negative electrode current collector) electrically connected to the electrode terminal 220 and the electrode assembly. The positive electrode current collector is formed of aluminum, an aluminum alloy or the like similarly to the positive electrode substrate layer of the positive electrode plate, and the negative electrode current collector is formed of copper, a copper alloy, or the like similarly to the negative electrode substrate layer of the negative electrode plate.

The spacer 300 is a rectangular-shaped and plate-like member that is disposed on a lateral (the Y-axis positives direction or the Y-axis negative direction) of the energy storage device 210 and electrically insulates the energy storage device 210 from other members. The spacer 300 is formed of any electrically insulating resin material or the like that can be used for the outer case 100.

Specifically, the spacer 300 includes a first spacer 301, a second spacer 302, and a third spacer 303. The first spacer 301 and the third spacer 303 are members that are disposed between two energy storage devices 210 disposed adjacently to each other and electrically insulate the two energy storage devices 210 from each other, and are members called inter-cell spacers. In the embodiment, two first spacers 301 are provided, and one third spacer 303 is provided.

The second spacer 302 is a member called an end spacer, is disposed between the energy storage device 210 at the end and the end plate 400 (401, 402), and electrically insulates the energy storage device 210 at the end and the end plate 400 (401, 402) from each other. Each of the first spacer 301, the second spacer 302 and the third spacer 303 is disposed so as to cover both sides (the side of the short side surfaces 211c) in the X axis direction of the energy storage device 210 and electrically insulate the energy storage device 210 from the side plate 500 (501, 502).

In the embodiment, two first spacers 301, two second spacers 302, and one third spacer 303 are disposed corresponding to the four energy storage devices 210. However, when the number of the energy storage devices 210 is other than four, the number of the first spacers 301 and the number of the third spacers 303 are appropriately changed according to the number of the energy storage devices 210. Details of the first spacer 301, the second spacer 302, and the third spacer 303 will be described later.

The end plate 400 and the side plate 500 are the binding members that press (bind) the energy storage devices 210 from the outside in the alignment direction (Y-axis direction) of the plurality of energy storage devices 210. That is, by sandwiching the plurality of energy storage devices 210 (energy storage device arrays 201) from both sides in the alignment direction, the end plate 400 and the side plate 500 press (bind) each energy storage device 210 included in the plurality of energy storage devices 210 (energy storage device arrays 201) from both sides in the alignment direction.

Specifically, the end plate 400 is a plate-like member (sandwiching member) that is disposed on both sides in the Y-axis direction of the plurality of energy storage devices 210 and the plurality of spacers 300, and sandwiches and holds the plurality of energy storage devices 210 and the plurality of spacers 300 from both sides in the alignment direction (Y-axis direction) of the plurality of energy storage devices 210 and the plurality of spacers 300. In the pair of end plates 400, the end plate 400 on the Y-axis negative direction side is also referred to as an end plate 401, and the end plate 400 on the Y-axis positive direction side is also referred to as an end plate 402. That is, the end plate 401 and the end plate 402 are disposed at positions sandwiching the plurality of energy storage devices 210 and the plurality of spacers 300 in the Y-axis direction (the layering direction of the plates of the electrode assembly that is included in the energy storage device 210) to bind the plurality of energy storage devices 210 and the plurality of spacers 300 to each other. The configuration of the end plate 400 (end plates 401, 402) will be described in detail later.

The side plates 500 are flat-plate-like members (binding bars) that attach both ends to the pair of end plates 400 to connect the pair of end plates 400, thereby binding the plurality of energy storage devices 210 and the plurality of spacers 300 to each other. That is, the side plate 500 is disposed so as to extend in the Y-axis direction so as to straddle the plurality of energy storage devices 210 and the plurality of spacers 300, and applies the binding force in the alignment direction (Y-axis direction) to the plurality of energy storage devices 210 and the like. In the embodiment, the pair of side plates 500 is disposed on both sides in the X-axis direction of the plurality of energy storage devices 210 and the like. Each of the pair of side plates 500 is attached to the end in the X-axis direction of the pair of end plates 400 at both ends in the Y-axis direction. Thus, the pair of side plates 500 sandwiches and binds the plurality of energy storage devices 210 and the like from both sides in the X-axis direction and both sides in the Y-axis direction.

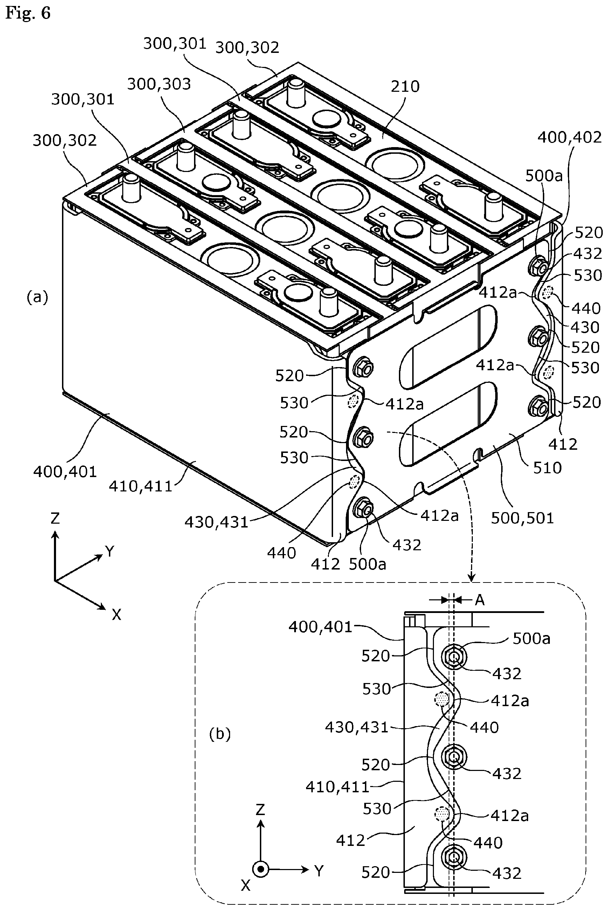

The side plate 500 is connected (joined) to the end plate 400 by a plurality of connecting members 500a arranged in the Z-axis direction (see Figs. 3 and 6). In the embodiment, the connecting member 500a is a nut, and is screwed with a screw of the end plate 400 penetrating the side plate 500 and is fastened to the screw. In the pair of side plates 500, the side plate 500 on the X-axis positive direction side is also referred to as a side plate 501, and the side plate 500 on the X-axis negative direction side is also referred to as a side plate 502. The configuration of the side plate 500 (side plates 501, 502) will be described in detail later.

The bus bars 600 are rectangular, flat-plate-like members connected to the energy storage devices 210. Specifically, the bus bar 600 is disposed above the plurality of energy storage devices 210, and is connected (joined) to the electrode terminals 220, the positive electrode external terminal 121, and the negative electrode external terminal 122 of the plurality of energy storage devices 210. That is, the bus bar 600 connects the electrode terminals 220 of the plurality of energy storage devices 210 to each other, and connects the electrode terminals 220 of the energy storage devices 210 at the ends to the positive electrode external terminal 121 and the negative electrode external terminal 122.

In the embodiment, the bus bar 600 and the electrode terminal 220, the positive electrode external terminal 121, and the negative electrode external terminal 122 are connected (joined) by bolt fastening, but may be connected (joined) by welding or the like. The bus bar 600 is formed of a metal conductive member such as aluminum, an aluminum alloy, copper, a copper alloy, or nickel or a combination thereof, or a conductive member other than metal. In the embodiment, the bus bar 600 connects the positive electrode terminal and the negative electrode terminal of the adjacent energy storage devices 210, thereby connecting four energy storage devices 210 in series. The connection state of the energy storage device 210 is not limited to the above connection, but series connection and parallel connection may be combined in any way.

### [2 Description of end plate 400 and side plate 500]

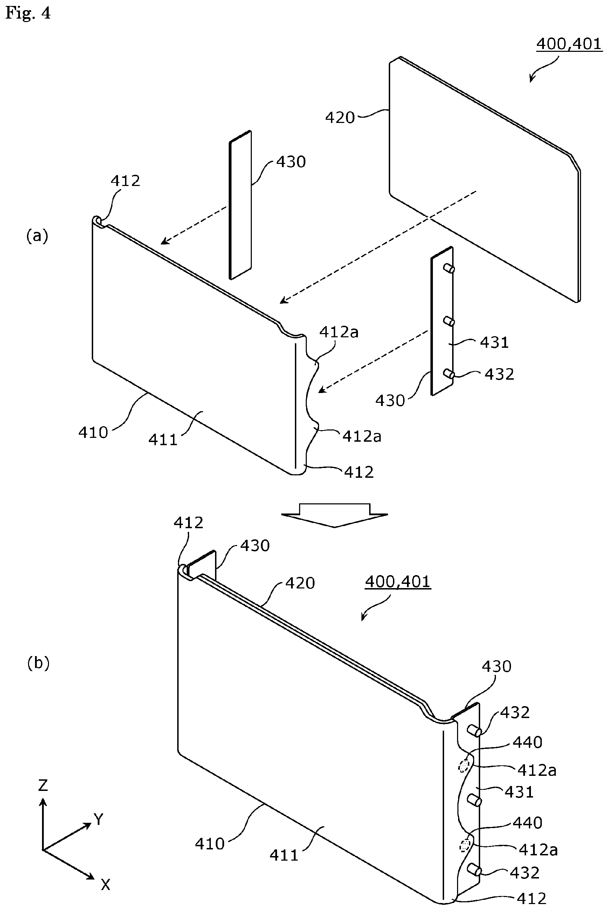

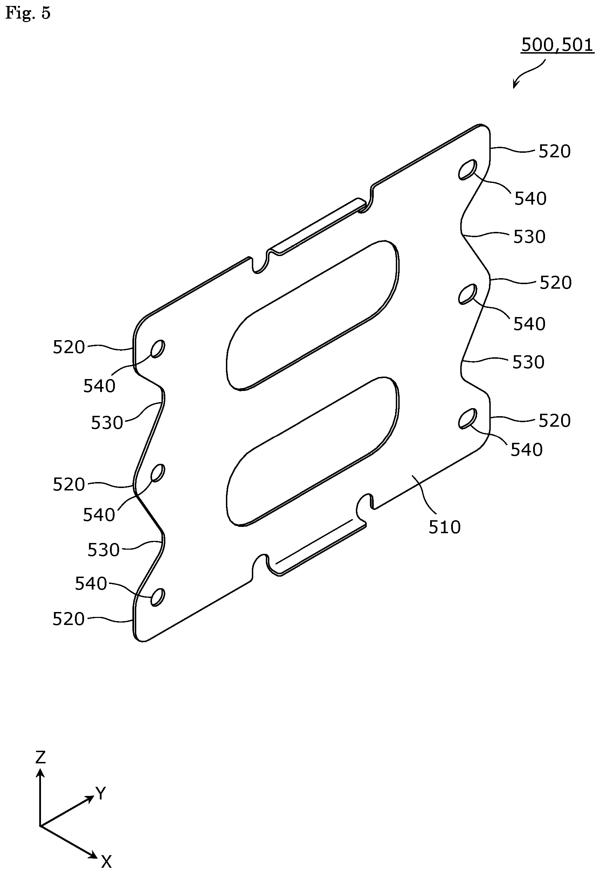

Configurations of the end plate 400 (end plates 401, 402) and the side plate 500 (side plates 501, 502) will be described in detail below. Fig. 4 is a perspective view illustrating the configuration of the end plate 400 of the embodiment. Specifically, Fig. 4(a) is an exploded perspective view illustrating each component of the end plate 401 in Fig. 3, and Fig. 4(b) is a perspective view illustrating a state in which each component of the end plate 401 is attached. The end plate 402 has the same configuration as the end plate 401. Fig. 5 is a perspective view illustrating the configuration of the side plate 500 of the embodiment. Specifically, Fig. 5 is a perspective view illustrating the configuration of the side plate 501 in Fig. 3. The side plate 502 has the same configuration as the side plate 501.

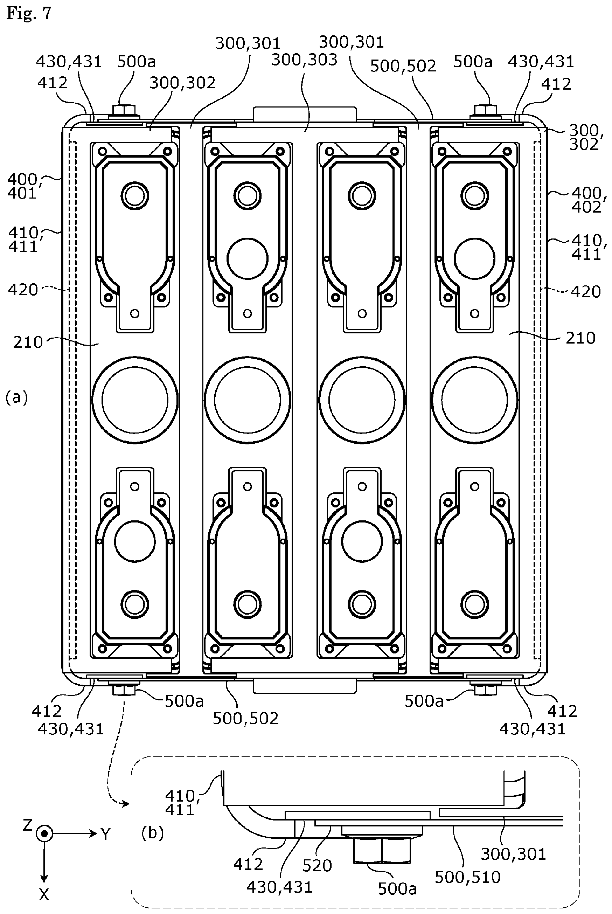

Fig. 6 is a perspective view and a side view illustrating a configuration when the side plate 500 is connected to the end plate 400 of the embodiment. Specifically, Fig. 6(a) is a perspective view illustrating a configuration where the end plate 400 and the side plate 500 are assembled to the energy storage device 210, and Fig. 6(b) is a side view illustrating a configuration where the end in the Y-axis negative direction in Fig. 6(a) is viewed from the X-axis positive direction. Fig. 7 is a top view illustrating a configuration when the side plate 500 is connected to the end plate 400 of the embodiment. Specifically, Fig. 7(a) is a top view illustrating a configuration when Fig. 6(b) is viewed from the Z-axis positive direction, and Fig. 7(b) is an enlarged top view illustrating a configuration when ends in the X-axis positive direction and the Y-axis negative direction in Fig. 7(a) are viewed from the Z-axis positive direction.

### [2.1 Description of configuration of end plate 400]

First, the configuration of the end plate 400 will be described in detail mainly with reference to Figs. 4, 6, and 7. As illustrated in Fig. 4, the end plate 400 includes an end plate body 410, a reinforcing member 420, and an extension member 430.

The end plate body 410 is a C-shaped plate-shaped member that constitutes a body of the end plate 400 as viewed in the Z-axis direction. That is, the end plate body 410 has a shape in which both ends in the X-axis direction are bent in the Y-axis direction. The end plate body 410 is made of high tensile strength steel or the like having tensile strength of about 980 MPa from a viewpoint of securing strength. The end plate body 410 includes a first plate portion 411 and a second plate portion 412.

The first plate portion 411 is a flat plate-like, rectangular-shaped member that is parallel to an XZ-plane opposite to each other in the Y-axis direction (second direction) and is disposed in the Y-axis direction of the energy storage device 210. Specifically, the first plate portion 411 is disposed at a position where the second spacer 302 is sandwiched between the first plate portion 411 and the side surface (long side surface 211b) on the Y-axis direction side of the case 211 of the energy storage device 210.

The second plate portion 412 is a flat plate-like member that is parallel to a YZ-plane opposite to each other in the X-axis direction (first direction) and is disposed in the X-axis direction of the energy storage device 210. Specifically, the second plate portion 412 is disposed at a position where the second spacer 302 is sandwiched between the second plate portion 412 and the side surface (short side surface 211c) on the X-axis direction side of the case 211 of the energy storage device 210. That is, the first plate portion 411 is a protruding member that protrudes in the Y-axis direction from the end in the X-axis direction of the first plate portion 411, and in the embodiment, two second plate portions 412 are disposed so as to protrude in the Y-axis direction from both ends in the X-axis direction of first plate portion 411. Because Fig. 4 illustrates the end plate 401, the second plate portion 412 is disposed so as to protrude in the Y-axis positive direction. However, in the end plate 402, the second plate portion 412 is disposed so as to protrude in the Y-axis negative direction (see Fig. 3).

The second plate portion 412 includes an end protrusion 412a that protrudes in the Y-axis direction (second direction). Because Fig. 4 illustrates the end plate 401, the second plate portion 412 has the end protrusion 412a protruding in the Y-axis positive direction. On the other hand, in the end plate 402, the second plate portion 412 includes the end protrusion 412a protruding in the Y-axis negative direction. In the embodiment, the second plate portion 412 includes two substantially triangular end protrusions 412a arranged in the Z-axis direction. With such the configuration, an end edge in the Y-axis direction of the second plate portion 412 has a wave shape.

The reinforcing member 420 is a flat plate-shaped, rectangular member disposed adjacent to the first plate portion 411 so as to overlap with the first plate portion 411 of the end plate body 410 in the Y-axis direction. Specifically, the reinforcing member 420 is formed to have substantially the same size as the first plate portion 411, and is connected (joined) to the first plate portion 411 to reinforce the first plate portion 411. The reinforcing member 420 is made of the high-tensile steel or the like having tensile strength of about 980 MPa from a viewpoint of securing strength. The reinforcing member 420 is connected (joined) to the first plate portion 411 by welding, but may be connected (joined) to the first plate portion 411 by bonding, bolting, caulking, engaging, fitting, or the like, or may be connected (joined) to the second plate portion 412. The reinforcing member 420 may not be connected (joined) to the end plate body 410.

The extension member 430 is a member that is provided separately from the end plate body 410 and attached to the second plate portion 412 of the end plate body 410 to extend the second plate portion 412 in the Y-axis direction (second direction). Specifically, the extension member 430 is disposed on the inside (on the side of the energy storage device 210) of the second plate portion 412 in the X-axis direction and mounted on the second plate portion 412. That is, the extension member 430 is not overlapped with the end plate body 410 (the first plate portion 411 and the second plate portion 412) and the reinforcing member 420 in the Y-axis direction (second direction), but overlapped with the second plate portion 412 in the X-axis direction (first direction).

The extension member 430 has at least one of rigidity and tensile strength lower than those of the second plate portion 412. The low rigidity refers to a state of being weak against an external force, and can be defined as a state in which a dimensional change is large against bending or twisting force. That is, the extension member 430 has lower rigidity than the second plate portion 412 means that the extension member 430 has a larger dimensional change (deflection amount) when the central portion of the region having the same size as that of the extension member 430 and the second plate portion 412 is pressed with the same force. Alternatively, it can also be said that the force required for causing the same dimensional change is smaller in the extension member 430 than in the second plate portion 412. The tensile strength represents the strength of the material when tensile force is applied to the material, and is defined as a value obtained by dividing a maximum load that the test piece endured until breaking when the test piece is pulled in the axial direction in the tensile test by the sectional area of the test piece. The definitions of the rigidity and the tensile strength are not limited to the above, and may be definitions within a range that can be usually interpreted by those skilled in the art.

In the embodiment, the extension member 430 is formed of high tensile strength of about 590 MPa or the like. That is, the extension member 430 is formed of a member having lower tensile strength than the end plate body 410 and the reinforcing member 420.

The extension member 430 includes an extension member body 431 and an extension member connecting portion 432. The extension member body 431 is a flat plate-like, rectangular member that is parallel to the YZ-plane and constitutes the body of the extension member 430. In the embodiment, as illustrated in Fig. 7, the extension member body 431 is formed to be smaller in thickness than the second plate portion 412 in the X-axis direction (first direction). The extension member body 431 is a member that is mounted on the inside (the side of the energy storage device 210) of the second plate portion 412. Specifically, the extension member body 431 is attached to the inside of the end protrusion 412a of the second plate portion 412.

More specifically, as illustrated in Fig. 4(b), the extension member body 431 and the end protrusion 412a are joined to form a protrusion joint 440, whereby the extension member body 431 is attached to the second plate portion 412. Because the second plate portion 412 includes the two end protrusions 412a arranged in the Z-axis direction, two protrusion joints 440 arranged in the Z-axis direction are formed corresponding to the two end protrusions 412a. In the embodiment, the extension member body 431 is connected (joined) to the end protrusion 412a by welding to form the protrusion joint 440, but may be connected (joined) to the end protrusion 412a by bolt fastening, caulked joining, engagement, fitting, bonding, or the like to form the protrusion joint 440.

The extension member connecting portion 432 is a member that protrudes in the X-axis direction from the extension member body 431 toward the side plate 500 and is connected to the side plate 500. Specifically, a plurality (in the embodiment, three) of extension member connecting portions 432 are disposed on the extension member 430 side by side in the Z-axis direction (third direction). With this configuration, the extension member 430 is connected to the side plate 500 in the X-axis direction (first direction).

The extension member connecting portion 432 is a caulking bolt formed by caulking a bolt in which a male screw is formed to the extension member body 431. As illustrated in Fig. 6, the extension member connecting portion 432 is inserted into a through-hole 540 described later of the side plate 500 and screwed with a female screw of the connecting member 500a described above, whereby the side plate 500 is connected to the extension member 430. The extension member 430 may be configured such that the side plate 500 is connected (joined) by welding, caulking, engagement, fitting, bonding, or the like, instead of bolting.

### [2.2 Description of configuration of side plate 500]

Subsequently, the configuration of the side plate 500 will be described in detail mainly with reference to Figs. 5 to 7. The side plate 500 is a flat plate-shaped member parallel to the YZ-plane. In the embodiment, as illustrated in Fig. 7, the side plate 500 is formed to be smaller in thickness than the second plate portion 412 and the extension member body 431 in the X-axis direction (first direction). The side plate 500 is formed of the high tensile strength steel or the like having the tensile strength of about 980 MPa from the viewpoint of securing strength and the like. The thickness of the side plate 500 is not particularly limited, but may be thicker than the extension member body 431 or thicker than the second plate portion 412. The material of the side plate 500 is also not particularly limited.

As illustrated in Fig. 5, the side plate 500 includes a side plate body 510, a side protrusion 520, a side recess 530, and a through-hole 540. The side plate body 510 is a flat plate-shaped member parallel to the YZ-plane constituting the body of the side plate 500, and the side protrusion 520 is a protruding member protruding in the Y-axis direction from the side plate body 510. In the embodiment, three side protrusions 520 arranged in the Z-axis direction are disposed at both ends in the Y-axis direction of side plate body 510.

The side recess 530 recessed in the Y-axis direction is disposed between two adjacent side protrusions 520 among the three side protrusions 520. That is, at each of both ends in the Y-axis direction of the side plate body 510, the two side recesses 530 arranged in the Z-axis direction are alternately arranged with the three side protrusions 520. Thus, both end edges of the side plate 500 in the Y-axis direction have a wave shape.

The through-hole 540 is a circular or oval through-hole into which the extension member connecting portion 432 is inserted. That is, the three through-holes 540 are disposed at positions corresponding to the three extension member connecting portions 432 arranged in the Z-axis direction at both ends in the Y-axis direction of the side plate body 510. The shape of the through-hole 540 is not particularly limited, but may be an elliptical shape, a rectangular shape, other polygonal shapes, or the like.

### [2.3 Description of connection configuration between end plate 400 and side plate 500]

Subsequently, a connection configuration of the end plate 400 and the side plate 500 will be described in detail mainly with reference to Figs. 6 and 7.

As illustrated in Fig. 6, the end protrusion 412a of the second plate portion 412 of the end plate 400 is disposed between any two of the plurality of extension member connecting portions 432 of the extension member 430. That is, the two end protrusions 412a are respectively disposed between two adjacent extension member connecting portions 432 out of the three extension member connecting portions 432. Specifically, the extension member connecting portion 432 is disposed at a position where at least a part of the extension member connecting portion overlaps with the end protrusion 412a in the Y-axis direction (second direction). In the embodiment, as illustrated in Fig. 6(b), the end protrusion 412a and the extension member connecting portion 432 are arranged to overlap with each other in a region indicated by A in the Y-axis direction (second direction).

Accordingly, the extension member 430 is connected to the side protrusion 520 of the side plate 500 at a position adjacent to the end protrusion 412a of the second plate portion 412 in the Z-axis direction (third direction). That is, the protrusion joint 440 that is a joint between the extension member 430 and the end protrusion 412a and the extension member connecting portion 432 and the connecting member 500a that are the connecting portion between the extension member 430 and the side protrusion 520 are disposed at positions adjacent to each other in the Z-axis direction. In the embodiment, the protrusion joint 440 and the connecting member 500a are disposed at positions overlapping with each other in the Y-axis direction. In Fig. 6(b), the protrusion joint 440 and extension member connecting portion 432 do not overlap with each other in the Y-axis direction, but may be disposed at positions overlapping with each other in the Y-axis direction.

The side protrusion 520 and the side recess 530 of the side plate 500 have shapes along the second plate portion 412 of the end plate 400. That is, the side recess 530 has a shape along the end protrusion 412a of the second plate portion 412, and is disposed opposite to the end protrusion 412a in the Y-axis direction (second direction) while the end plate 400 and the side plate 500 are connected to each other. Thus, the side plate 500 is connected to the extension member 430 without overlapping with the second plate portion 412 in the X-axis direction (first direction).

As illustrated in Fig. 7(b), the extension member body 431 of the extension member 430 is disposed side by side with the first spacer 301 in the Y-axis direction. That is, in the end plate 400, the extension member 430 extends the second plate portion 412 in the Y-axis direction, and extends only to the front side of the first spacer 301 but does not interfere with the first spacer 301. The second plate portion 412 (end protrusion 412a) of the end plate 400 and the side protrusion 520 of the side plate 500 are disposed on the same side of the extension member body 431. In the embodiment, the second plate portion 412 and the side protrusion 520 are disposed on the outside in the X-axis direction (the side opposite to the energy storage device 210, namely, the X-axis positive direction side in Fig. 7(b)) in the X-axis direction of the extension member body 431. Thus, the outside surface in the X-axis direction of the side protrusion 520 is disposed on the inside (on the side of the energy storage device 210) with respect to the outside surface in the X-axis direction of the second plate portion 412.

### [3 Description of spacer]

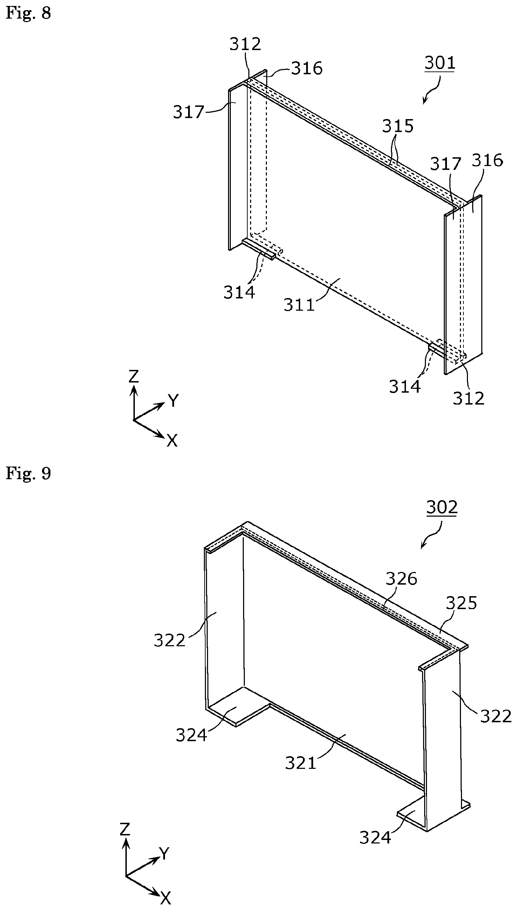

The spacer 300 will be described in detail below. First, the first spacer 301 will be described. Fig. 8 is a perspective view illustrating an appearance of the first spacer 301 of the embodiment. In the embodiment, two first spacers 301 are provided, one first spacer 301 disposed in the Y-axis positive direction will be described because the two first spacers 301 have the same shape, and the other first spacer 301 disposed in the Y-axis negative direction will not be described.

The first spacer 301 includes a first body 311 and a pair of first walls 312. The first body 311 is a rectangular flat-plate-like member parallel to the XZ-plane, and is disposed between the pair of energy storage devices 210 disposed adjacently to each other. Specifically, the first body 311 is formed in substantially the same shape as the long side surface 211b of the case 211, and entirely overlaps with the long side surface 211b.

A plurality of protrusions 314 that project downward from the bottom surface 211a of the energy storage device 210 are provided in the first body 311. Specifically, a pair of protrusions 314 at ends (lower ends) in the Z-axis negative direction and at both ends in the X-axis direction is provided in the first body 311. The pair of protrusions 314 extends in a rectangular shape along the XY-plane, and is disposed so as to sandwich the first body 311 in the Y-axis direction. Each of the protrusions 314 is disposed opposite to the bottom surfaces 211a of the two adjacent energy storage devices 210, so that the creeping distance between the bottom surfaces 211a of the two adjacent energy storage devices 210 can be lengthened by each of the protrusions 314.

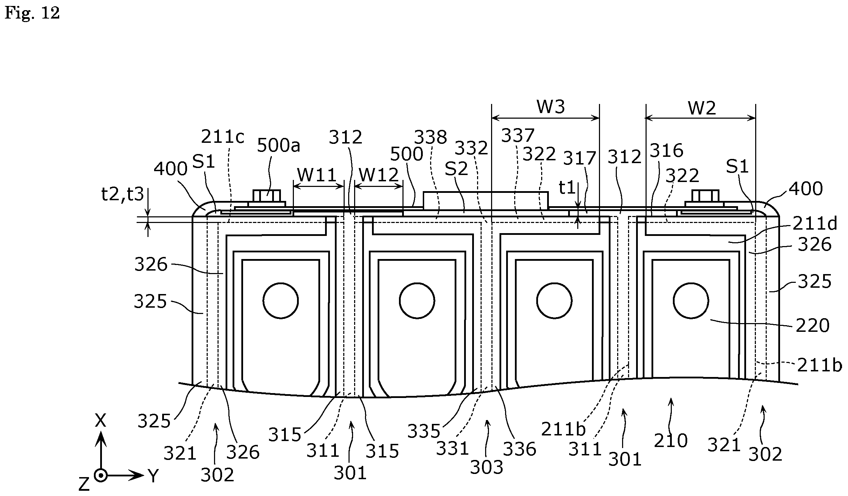

A pair of plates 315 disposed above the top surface 211d of the energy storage device 210 is provided in the first body 311. Specifically, in the first body 311, the pair of plates 315 is continuously formed on an end (upper end) in the Z-axis positive direction over the entire length in the X-axis direction. The pair of plates 315 extends along the XY-plane and is disposed so as to sandwich the first body 311 in the Y-axis direction. Each of the plates 315 is disposed opposite to the top surfaces 211d of the two adjacent energy storage devices 210 (see Fig. 12). Accordingly, the creeping distance between the top surfaces 211d of the two adjacent energy storage devices 210 can be lengthened by each of the plates 315.

In this manner, the protrusions 314 and the plates 315 can improve electrical insulation between the cases 211 of the two adjacent energy storage devices 210.

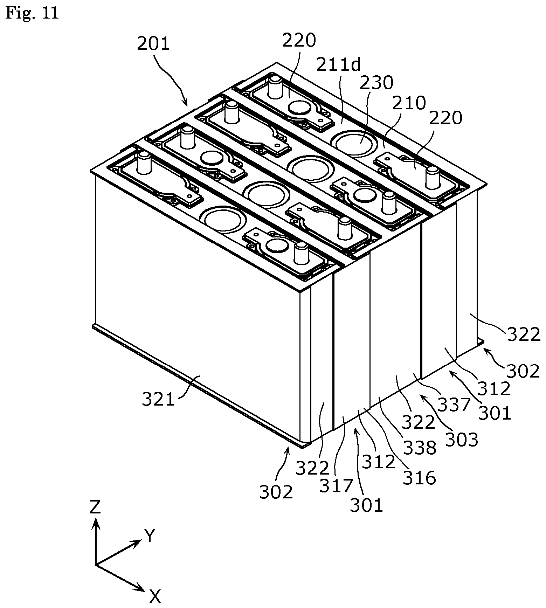

The pair of first walls 312 is provided at both ends in the X-axis direction of the first body 311. Each of the first walls 312 is a rectangular flat-plate-like portion parallel to the YZ-plane. Each of the first walls 312 is continuously provided over the entire length in the Z-axis direction of the first body 311, and the first body 311 is coupled to the central portion in the Y-axis direction of the first wall 312. Therefore, both ends in the Y-axis direction of each first wall 312 extend outward from the first body 311 along the Y-axis direction. In each of the first walls 312, a portion in the Y-axis positive direction with respect to the first body 311 is defined as a first overlapping portion 316, and a portion in the Y-axis negative direction with respect to the first body 311 is defined as a second overlapping portion 317. The first overlapping portion 316 and the second overlapping portion 317 continuously cover parts of the short side surfaces 211c of the adjacent energy storage devices 210 over the entire length in the Z-axis direction (see Fig. 11).

The second spacer 302 will be described below. Fig. 9 is a perspective view illustrating an appearance of the second spacer 302 of the embodiment. In the embodiment, two second spacers 302 are provided and have the same shape. However, the two second spacers 302 are different in that the posture is rotated by 180 degrees about the Y-axis. For this reason, one second spacer 302 disposed in the Y-axis positive direction will be described, and the other second spacer 302 disposed in the Y-axis negative direction will not be described.

The second spacer 302 includes a second body 321 and a pair of second walls 322. The second body 321 is a rectangular-shaped, flat-plate-like member parallel to the XZ-plane, and is disposed between the energy storage devices 210 and the end plates 400 disposed adjacently to each other. Specifically, the second body 321 is formed in substantially the same shape as the long side surface 211b of the case 211, and entirely overlaps with the long side surface 211b.

The pair of second walls 322 is provided at both ends in the X-axis direction of the second body 321. Each of the second walls 322 is a rectangular, flat-plate-like portion parallel to the YZ-plane. Each of the second walls 322 is continuously provided over the entire length of the second body 321 in the Z-axis direction, and the second body 321 is connected to an end in the Y-axis positive direction of the second wall 322. Accordingly, each of the second walls 322 continuously covers a part of the short side surface 211c of the energy storage device 210 over the entire length in the Z-axis direction (see Fig. 11).

A plurality of protrusions 324 that project downward from the bottom surface 211a of the energy storage device 210 are provided in the second body 321 and each of the second walls 322. Specifically, in the second body 321, the protrusion 324 is formed on the end (lower end) in the Z-axis negative direction and on each of both ends in the X-axis direction. Each of the protrusions 324 extends in a rectangular shape along the XY-plane and is provided continuously with respect to each of the second walls 322. Each of the protrusions 324 is disposed opposite to the bottom surface 211a of the energy storage device 210, so that the creeping distance between the bottom surface 211a of the energy storage device 210 and the lower end of the end plate 400 that are disposed adjacently to each other can be lengthened by each of the protrusions 324.

A first plate 325 and a second plate 326 that are disposed above the top surface 211d of the energy storage device 210 and the upper end of the end plate 400 are provided in the second body 321 and each of the second walls 322. Specifically, the first plate 325 is continuously formed on the end (upper end) in the Z-axis positive direction of the second body 321 and over the entire length of the edge in the Y-axis positive direction. The first plate 325 extends in a rectangular shape along the XY-plane.

The second plate 326 is continuously provided on the end (upper end) in the Z-axis positive direction of the second body 321 and over the entire length of the edge in the Y-axis negative direction. Both ends in the X-axis direction of the second plate 326 extend along the end in the Z-axis positive direction of each of the second walls 322. Specifically, the end in the X-axis negative direction of the second plate 326 extends in the Y-axis negative direction so as to protrude in the X-axis positive direction from the edge in the X-axis positive direction of the second wall 322 disposed in the X-axis negative direction. The end in the X-axis positive direction of the second plate 326 extends in the Y-axis negative direction so as to protrude in the X-axis negative direction from the edge in the X-axis negative direction of the second wall 322 disposed in the X-axis positive direction. Thus, the second plate 326 is formed in a substantially inverted C-shape as viewed in the Z-axis direction.

The second plate 326 is disposed opposite to the top surface 211d of the energy storage device 210, and the first plate 325 is disposed opposite to the upper end of the end plate 400 (see Fig. 12). The first plate 325 and the second plate 326 can increase the creeping distance between the top surface 211d of the energy storage device 210 and the upper end of the end plate 400 disposed adjacently to each other.

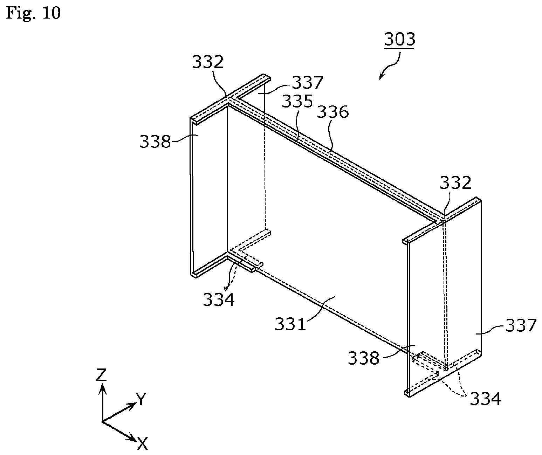

The third spacer 303 will be described below. Fig. 10 is a perspective view illustrating an appearance of the third spacer 303 of the embodiment. The third spacer 303 includes a third body 331 and a pair of third walls 332. The third body 331 is a portion having a rectangular, flat plate shape parallel to the XZ-plane, and is disposed between the pair of energy storage devices 210 disposed adjacently to each other. Specifically, the third body 331 is formed in substantially the same shape as the long side surface 211b of the case 211, and entirely overlaps with the long side surface 211b.

The pair of third walls 332 is provided at both ends in the X-axis direction of the third body 331. Each of the third walls 332 is a rectangular, flat plate portion parallel to the YZ-plane. Each of the third walls 332 is continuously provided over the entire length in the Z-axis direction of the third body 331, and the third body 331 is connected to the central portion in the Y-axis direction of the third wall 332. For this reason, both ends in the Y-axis direction of each of the third walls 332 extend outward along the Y-axis direction from the third body 331. In each of the third walls 332, a portion in the Y-axis positive direction with respect to the third body 331 is defined as a first member 337, and a portion in the Y-axis minus direction with respect to the third body 331 is defined as a second member 338. The first member 337 and the second member 338 continuously cover a part of the short side surface 211c of the adjacent energy storage device 210 over the entire length in the Z-axis direction (see Fig. 11).

A plurality of protrusions 334 that protrude downward from the bottom surface 211a of the energy storage device 210 are provided in the third body 331 and each of the third walls 332. Specifically, in the third body 331, the protrusion 334 is formed on the end (lower end) in the Z-axis negative direction and on each of both ends in the X-axis direction. Each of the protrusions 334 extends in a substantially L-shape along the XY-plane and is continuously provided with respect to each of the third walls 332. Each of the protrusions 334 is disposed opposite to the bottom surface 211a of the energy storage device 210, so that the creeping distance between two energy storage devices 210 disposed adjacently to each other can be lengthened by each of the protrusions 334.

A first plate 335 and a second plate 336 that are disposed above the top surface 211d of the energy storage device 210 are provided in the third body 331 and each of the third walls 332. Specifically, the first plate 335 is continuously formed on the end (upper end) in the Z-axis positive direction of the third body 331 and over the entire length of the edge in the Y-axis negative direction. Both ends in the X-axis direction of the first plate 335 extend along the end in the Z-axis positive direction of each of the third walls 332. Specifically, the end in the X-axis negative direction of the first plate 335 extends in the Y-axis negative direction so as to protrude in the X-axis positive direction from the edge in the X-axis positive direction of the second wall 322 disposed in the X-axis negative direction. The end in the X-axis positive direction of the first plate 335 extends in the Y-axis negative direction so as to protrude in the X-axis negative direction from the edge in the X-axis negative direction of the third wall 332 disposed in the X-axis positive direction. Thus, the first plate 335 is formed in a substantially inverted C-shape as viewed in the Z-axis direction.

The second plate 336 is continuously provided on the end (upper end) in the Z-axis positive direction of the third body 331 and over the entire length of the edge in the Y-axis positive direction. Both ends in the X-axis direction of the second plate 336 extend along the end in the Z-axis positive direction of each of the third walls 332. Specifically, the end in the X-axis negative direction of the second plate 336 extends in the Y-axis positive direction so as to protrude in the X-axis positive direction from the edge in the X-axis positive direction of the second wall 322 disposed in the X-axis negative direction. The end in the X-axis positive direction of the second plate 336 extends in the Y-axis positive direction so as to protrude in the X-axis negative direction from the edge in the X-axis negative direction of the third wall 332 disposed in the X-axis positive direction. Thus, the second plate 336 is formed in a substantially C-shape as viewed in the Z-axis direction.

The first plate 335 and the second plate 336 are disposed opposite to the top surface 211d of the energy storage device 210 (see Fig. 12). Accordingly, the creeping distance between the top surfaces 211d of the adjacent energy storage devices 210 can be lengthened by the first plate 335 and the second plate 336.

The state in which each spacer 300 is mounted on the plurality of energy storage devices 210 will be described below. Fig. 11 is a perspective view illustrating the state in which the spacers 300 of the embodiment are mounted on the plurality of energy storage devices 210. Fig. 12 is a top view illustrating a part of the state in which the spacers 300 of the embodiment are mounted on the plurality of energy storage devices 210.

As illustrated in Figs. 11 and 12, the third spacer 303 is disposed between the second energy storage device 210 and the third energy storage device 210 out of the four energy storage devices 210 from the end in the Y-axis negative direction. That is, the third spacer 303 is disposed at the central portion in the Y-axis direction of the energy storage device array 201. The third wall 332 of the third spacer 303 continuously overlaps with a part of each of the short side surfaces 211c of the second energy storage device 210 and the third energy storage device 210 over the entire length in the Z-axis direction. The third wall 332 of the third spacer 303 covers at least a half of the short side surface 211c of the energy storage device 210 in the Y-axis direction. That is, a protrusion length W3 of the third wall 332 of the third spacer 303 (the length in the Y-axis direction from the third body 331 to the tip of the third wall 332) is longer than 1/2 of the length of the short side surface 211c in the Y-axis direction.

One of the two second spacers 302 is disposed so as to overlap with the fourth energy storage device 210 from the end in the Y-axis negative direction among the four energy storage devices 210 from the Y-axis positive direction. The other second spacer 302 is disposed so as to overlap with the first energy storage device 210 from the end in the Y-axis negative direction among the four energy storage devices 210 from the Y-axis negative direction. That is, the two second spacers 302 are disposed at positions sandwiching the four energy storage devices 210 in the Y-axis direction. The second walls 322 of the two second spacers 302 continuously overlap with a part of each of the short side surfaces 211c of the first energy storage device 210 and the fourth energy storage device 210 over the entire length in the Z-axis direction. The second wall 322 of the second spacer 302 covers at least a half of the short side surface 211c of the energy storage device 210 in the Y-axis direction. That is, a protrusion length W2 of the second wall 322 of the second spacer 302 (the length in the Y-axis direction from the second body 321 to the tip of the second wall 322) is longer than 1/2 of the length of the short side surface 211c in the Y-axis direction. In the embodiment, the protrusion length W2 of the second wall 322 of the second spacer 302 is equal to the protrusion length W3 of the third wall 332 of the third spacer 303.

One of the first spacers 301 of the two first spacers 301 is disposed between the third energy storage device 210 and the fourth energy storage device 210 from the end in the Y-axis negative direction of the four energy storage devices 210. The first walls 312 of one of the first spacers 301 is opposite to a part of each of the short side surfaces 211c of the third energy storage device 210 and the fourth energy storage device 210 over the entire length in the Z-axis direction.

The other first spacer 301 is disposed between the first energy storage device 210 and the second energy storage device 210 from the end in the Y-axis negative direction among the four energy storage devices 210. The other first wall 312 of the first spacers 301 is opposite to a part of each of the short side surfaces 211c of the first energy storage device 210 and the second energy storage device 210 over the entire length in the Z-axis direction.

The arrangement of the first wall 312, the second wall 322, and the third wall 332 will be described below. The two first spacers 301 are different from each other only in that the positional relationship between the second spacer 302 and the third spacer 303 is horizontally reversed in Fig. 12, so that one first spacer 301 will be described as an example while the other first spacer 301 will be omitted.

As illustrated in Fig. 12, the first wall 312 of one first spacer 301 is disposed so as to overlap with the second wall 322 of the second spacer 302 and the third wall 332 of the third spacer 303 from the outside.
Specifically, in the one first spacer 301, the first overlapping portion 316 of the first wall 312 overlaps with the second wall 322 of the one second spacer 302 from the outside, and the second overlapping portion 317 of the first wall 312 overlaps with the first member 337 of the third wall 332 of the third spacer 303 from the outside. That is, the space between the pair of adjacent energy storage devices 210 is covered with the first wall 312 of the first spacer 301, the second wall 322 of the second spacer 302, and the third wall 332 of the third spacer 303. In this state, the gap in the Y-axis direction between the first wall 312, the second wall 322, and the third wall 332 is closed. Accordingly, the insulation between the pair of energy storage devices 210 disposed adjacently to each other is ensured.

The first overlapping portion 316 and the second overlapping portion 317 are disposed outside the second wall 322 and the third wall 332, so that the second wall 322 and the third wall 332 are disposed close to the energy storage device 210. Thus, spaces S1, S2 are formed outside the second wall 322 and the third wall 332. Specifically, when the two first spacers 301, the two second spacers 302, and the one third spacer 303 are viewed as a whole, the overall outer surface shape of the first wall 312, the second wall 322, and the third wall 332 is an uneven shape in which the first wall 312 forms the protrusion while the second wall 322 and the third wall 332 form the recess. For this reason, the spaces S1, S2 are formed outside the second wall 322 and the third wall 332 that form the recess. Other members can be accommodated in the spaces S1, S2. In the embodiment, a part (other member) of the fastening portion between the end plate 400 and the side plate 500 is accommodated in the space S1 outside the second wall 322. Thus, the second spacer 302 and other members are densely disposed. In the embodiment, the space S2 outside the third wall 332 is an excess space, but other members can also be accommodated in the space S2.

A protrusion length W11 of the first overlapping portion 316 (the length in the Y-axis direction from the first body 311 to the tip of the first overlapping portion 316) may be any length as long as the first overlapping portion 316 overlaps with the second wall 322. Similarly, a protrusion length W12 of the second overlapping portion 317 may be any length as long as the second overlapping portion 317 overlaps with the third wall 332. In the embodiment, the protrusion lengths W11, W12 are equivalent, but may be different. In the embodiment, the protrusion lengths W11, W12 are shorter than the protrusion length W2 of the second wall 322 and the protrusion length W3 of the third wall 332, respectively. In this case, the spaces S1, S2 can be made wider.

A thickness t1 of the first wall 312 may be any thickness, and is preferably thicker than each of a thickness t2 of the second wall 322 and a thickness t3 of the third wall 332. The second plate 326 is entirely provided over the second wall 322 and the protrusion 324 is entirely provided under the second wall 322. Also in the third wall 332, the first plate 335 and the second plate 336 are entirely provided over the third wall 332, and the protrusion 334 is entirely provided under the third wall 332. On the other hand, in the first wall 312, the plate 315 is provided only in a part over the first wall 312, and the protrusion 314 is provided only in a part under the first wall 312. That is, the first wall 312 can be said to be a member that is structurally weaker than the second wall 322 and the third wall 332. In order to prevent this difference in strength, the thickness t1 of the first wall 312 is made larger than each of the thickness t2 of the second wall 322 and the thickness t3 of the third wall 332. In the embodiment, the case where the thickness t2 of the second wall and the thickness t3 of the third wall are equal to each other is exemplified. However, these thicknesses may be different from each other.

### [4. Description of effects]

As described above, according to the energy storage apparatus 10 of the embodiment of the present invention, the end plate 400 includes the extension members 430 that are mounted on the second plate portions 412 opposite to each other in the first direction (X-axis direction) to extend the second plate portions 412 in the second direction (Y-axis direction). The extension member 430 is connected to the side plate 500 in the first direction.

In the case where the extension member 430 is not provided on the end plate 400, when the end plate 400 is formed of a member having high strength, sometimes it is difficult to form a caulking bolt or the like at the connecting member with the side plate 500. This is because when the strength of the caulking bolt is weak, the rivet bolt is damaged by deformation or the like when the caulking bolt is attached to the high-strength end plate 400, and it is difficult to attach the caulking bolt to the end plate 400. For this reason, in the end plate 400, the extension member connecting portion 432 (caulking bolt) is formed in the extension member 430, the extension member 430 is attached to the second plate portion 412, and the side plate 500 is connected to the extension member connecting portion 432 of the extension member 430. Accordingly, even when it is difficult to form the connecting member between the second plate portion 412 and the side plate 500 in the second plate portion 412 by forming the second plate portion 412 using a high-strength member, the end plate 400 and the side plate 500 can be easily connected to each other by connecting the side plate 500 to the extension member 430.

In the case where the connecting member to the side plate 500 is provided in the second plate portion 412 of the end plate 400, the second plate portion 412 is formed of a member having relatively low strength to form the connecting member to the side plate 500. However, when the second plate portion 412 is formed of the member having relatively low strength, the thickness of the second plate portion 412 is required to be increased in order to secure the strength of the second plate portion 412. For this reason, in the end plate 400, the side plate 500 is connected to not the second plate portion 412 but the extension member 430. Accordingly, because the second plate portion 412 can be formed of a high-strength member, the thickness of the second plate portion 412 is not required to be increased in order to secure the strength of the second plate portion 412. Accordingly, in the energy storage apparatus 10, the width in the thickness direction (first direction) of the second plate portion 412 can be reduced, so that space saving can be implemented. As described above, in the energy storage apparatus 10, the end plate 400 and the side plate 500 can be easily connected to each other while the space saving is implemented.

The side plate 500 is connected to the extension member 430 without overlapping with the second plate portion 412 of the end plate 400 in the first direction. In this manner, the side plate 500 does not overlap with the second plate portion 412 in the first direction, the increase in the width in the first direction of the energy storage apparatus 10 can be prevented due to the side plates 500 overlapping with the second plate portion 412. Accordingly, in the energy storage apparatus 10, the end plate 400 and the side plate 500 can be easily connected to each other while the space saving is implemented.

In the end plate 400, the extension member 430 is formed to have the smaller thickness in the first direction than that in the second plate portion 412. As described above, the extension member 430 has a smaller thickness in the first direction than that in the second plate portion 412, so that the side plate 500 can be connected to a place where the end plate 400 has the smaller thickness. With such the configuration, in the energy storage apparatus 10, the width in the first direction can be formed small, so that the end plate 400 and the side plate 500 can be easily connected to each other while the space saving is implemented.

In the end plate 400, the extension member 430 is formed to have at least one of rigidity and tensile strength lower than those of the second plate portion 412. As described above, the extension member 430 has at least one of the rigidity and the tensile strength lower than those of the second plate portion 412, so that the member connected to the side plate 500 can be formed more easily than the second plate portion 412. The extension member 430 may be formed with a lower strength than the second plate portion 412, so that the thickness in the first direction can be formed smaller than that of the second plate portion 412. With such the configuration, the side plate 500 can be connected to the end plate 400 at a portion where the thickness of the end plate is small, so that a width of the energy storage apparatus can be formed small in the first direction in the energy storage apparatus 10. Accordingly, in the energy storage apparatus 10, the end plate 400 and the side plate 500 can be easily connected to each other while the space saving is implemented.

Because the extension member 430 is attached to the second plate portion 412 inside the second plate portion 412 (end protrusion 412a), even when the side plate 500 (side protrusion 520) is attached to the extension member 430, the side plate 500 can be prevented from protruding outward. The second plate portion 412 and the side protrusion 520 are disposed on the same side of the extension member body 431, so that the increase in the total thickness of the extension member 430, the second plate portion 412, and the side protrusion 520 can be prevented even when the extension member 430 is a flat plate-shaped member. The outside surface of the side protrusion 520 is disposed inside the outside surface of the second plate portion 412, so that the side plate 500 can be prevented from protruding outward.

In the end plate 400, the extension member 430 is attached to the second plate portion 412 without overlapping with the second plate portion 412 in the second direction. In this manner, the extension member 430 is not overlapped with the second plate portion 412 in the second direction, so that the length in the second direction can be formed small in the energy storage apparatus 10. Accordingly, in the energy storage apparatus 10, the end plate 400 and the side plate 500 can be easily connected to each other while the space saving is implemented.

The extension member 430 is attached to the end protrusion 412a of the second plate portion 412, and connected to the side plate 500 at a position adjacent to the end protrusion 412a in the third direction (Z-axis direction). When the extension member 430 is attached to the end protrusion 412a of the second plate portion 412, the length in the second direction of the end plate 400 may be increased. Therefore, the side plate 500 is connected to the extension member 430 at a position adjacent to the end protrusion 412a in the third direction, and the length in the second direction of the end plate 400 is prevented from becoming long. Accordingly, the end plate 400 can be miniaturized, so that a material usage amount of the end plate 400 that is a high-strength (expensive) member can be reduced or the end plate 400 can be prevented from interfering with other members (in the embodiment, the first spacer 301). As described above, the end plate 400 and the side plate 500 can be easily connected to each other while the end plate 400 is miniaturized.

In the end plate 400, the extension member connecting portion 432 that is a connecting portion of the extension member 430 to the side plate 500 is disposed at the position where at least a part of the extension member connecting portion 432 overlaps with the end protrusion 412a of the second plate portion 412 in the second direction. As described above, the protrusion amount of the extension member 430 toward the side plate 500 can be reduced by disposing the extension member connecting portion 432 at the position overlapping with the end protrusion 412a in the second direction. Accordingly, the length in the second direction of the extension member 430 can be shortened, so that the end plate 400 and the side plate 500 can be connected to each other while the end plate 400 is miniaturized.

The extension member 430 of the end plate 400 includes the extension member connecting portion 432 that is a connecting portion with the plurality of side plates 500 arranged in the third direction. As described above, the extension member 430 is connected to the side plate 500 by the plurality of extension member connecting portions 432 arranged in the third direction, so that the extension member 430 and the side plate 500 can be more firmly connected to each other while the increase in the length in the second direction of the extension member 430 is prevented. Accordingly, the end plate 400 and the side plate 500 can be easily and firmly connected to each other while the end plate 400 is miniaturized.

In the end plate 400, the end protrusion 412a of the second plate portion 412 is disposed between any two of the plurality of extension member connecting portions 432 included in the extension member 430. In this manner, the end protrusion 412a of the second plate portion 412 is disposed between the two extension member connecting portions 432 of the extension member 430, so that the extension member 430 can be attached to the second plate portion 412 by utilizing the space between the two extension member connecting portions 432.

The side plate 500 includes the side recess 530 having a shape along the end protrusion 412a of the second plate portion 412 of the end plate 400, so that the side plate 500 can be brought close to the second plate portion 412 of the end plate 400. Thus, the length in the second direction of the extension member 430 connected to the side plate 500 can be shortened, so that the end plate 400 and the side plate 500 can be easily connected to each other while the end plate 400 is miniaturized.

The energy storage apparatus 10 of the embodiment of the present invention includes the plurality of energy storage devices 210 arranged in the Y-axis direction (second direction) and the insulating first spacer 301 disposed between the pair of energy storage devices 210 disposed adjacently to each other. The energy storage apparatus 10 includes the insulating second spacer 302 disposed at the position where one energy storage device 210 of the pair of energy storage devices 210 is sandwiched between the second spacer 302 and the first spacer 301, and the insulating third spacer 303 disposed at the position where the other energy storage device 210 of the pair of energy storage devices 210 is sandwiched between the third spacer 303 and the first spacer 301. The second spacer 302 includes the second wall 322 that covers the short side surface 211c (outside surface) along the Y-axis direction in one energy storage device 210. The third spacer 303 includes the third wall 332 that covers the short side surface 211c along the Y-axis direction in one energy storage device 210. The first spacer 301 includes the first body 311 (body) disposed between the pair of energy storage devices 210 and the first wall 312 that is formed on the end of the first body 311 in the X-axis direction (first direction) that intersects with the Y-axis direction and extends along the Y-axis direction. The first wall 312 includes the first overlapping portion 316 overlapping with the second wall 322 and the second overlapping portion 317 that is provided on the opposite side of the first body 311 from the first overlapping portion 316 and overlaps with the third wall 332.

With such the configuration, the first overlapping portion 316 of the first spacer 301 overlaps with the second wall 322 of the second spacer 302 and the second overlapping portion 317 overlaps with the third wall 332 of the third spacer 303, so that the space between the pair of energy storage devices 210 disposed adjacently to each other can be covered by the first wall 312 and the third wall 332. Accordingly, the insulation between the pair of adjacent energy storage devices 210 can be ensured without providing a dedicated member ensuring the insulation between the energy storage devices 210 such as an insulator. Accordingly, the number of components can be reduced, and the increase in size of the energy storage apparatus 10 can be prevented.

Because the first wall 312 has a flat plate shape, the first overlapping portion 316 and the second overlapping portion 317 can be disposed outside the second wall 322 and the third wall 332. Accordingly, the first overlapping portion 316 and the second overlapping portion 317 overlap each other as viewed in the Y-axis direction, and the increase in size in the X-axis direction of the energy storage apparatus 10 can be particularly prevented.

The first overlapping portion 316 and the second overlapping portion 317 are disposed outside the second wall 322 and the third wall 332, so that the second wall 322 and the third wall 332 can be disposed close to the energy storage device 210. In the spaces S1, S2 formed by bringing the second wall 322 and the third wall 332 close to the energy storage device 210, other members (fastening portions between the side plate and the end plate and the like) can be disposed. Accordingly, the second spacer 302 or the third spacer 303 and other members can be densely disposed, so that the increase in size of the energy storage apparatus 10 can be prevented.

The overall outer surface shape of the first wall 312, the second wall 322, and the third wall 332 is an uneven shape in which the first wall 312 forms the protrusion and the second wall 322 and the third wall 332 form the recess, so that other members in the recess can be accommodated while the creeping distance is secured. Accordingly, the first spacer 301, the second spacer 302, the third spacer 303 and other members can be densely disposed and the increase in size of the energy storage apparatus 10 can be prevented.

The thickness t1 of the first wall 312 is larger than the thickness t2 of the second wall 322 and the thickness t3 of the third wall, so that the strength of the first wall 312 can be enhanced. Accordingly, the first wall 312 can be prevented from being damaged during the assembly.

The first wall 312, the second wall 322, and the third wall 332 cover the entire case 211 of the energy storage device 210 in the Z axis direction (vertical direction), so that the high insulation can be ensured even in the vertical direction.

### [5 Description of modifications]

Although the energy storage apparatus 10 of the embodiment is described above, the present invention is not limited to the embodiment. The embodiment disclosed herein is illustrative in all respects and is not restrictive, and the scope of the present invention includes all modifications within the meaning and scope equivalent to the claims.

In the embodiment, the end plate body 410 and the reinforcing member 420 are formed of the high tensile strength steel having the tensile strength of about 980 MPa, and the extension member 430 is formed of the high tensile strength steel having the tensile strength of about 590 MPa. However, the end plate body 410 and the extension member 430 may not be formed of the high tensile strength steel as long as the extension member 430 is lower in at least one of the rigidity and the tensile strength than that of the end plate body 410. The end plate body 410 and the extension member 430 may be formed of a metal material such as aluminum, an aluminum alloy, stainless steel, iron, or a plated steel plate, subjected to an insulation treatment, or formed of a member having high strength and an electrically insulating property. The extension member 430 may be formed such that at least one of the rigidity and the tensile strength is lower than that of the end plate body 410 due to a thickness, a shape, or the like, rather than a material. Alternatively, the extension member 430 may be made of a material having both the rigidity and the tensile strength higher than those of the end plate body 410. The reinforcing member 420 may be made of any material.

In the embodiment, the extension member 430 of the end plate 400 is disposed on the inside (on the side of the energy storage devices 210) of the second plate portion 412 in the first direction (X-axis direction) and mounted on the second plate portion 412. However, the extension members 430 may be disposed outside the second plate portion 412 (on the side opposite to the energy storage devices 210) and attached to the second plate portion 412, or disposed in the second direction (Y-axis direction) of the second plate portion 412 and attached to the second plate portion 412.

In the embodiment, the end plate 400 is a C-shaped member when viewed from the Z-axis direction, and the side plate 500 is a flat plate-like member. However, the side plate 500 may be the C-shaped member when viewed from the Z-axis direction, and the end plate 400 may be the flat plate-like member. That is, the second plate portion 412 and the extension member 430 of the end plate 400 may be disposed opposed to each other in the Y-axis direction, and the extension member 430 may extend the second plate portion 412 in the X-axis direction and be connected to the side plate 500 in the Y-axis direction. In this case, the Y-axis direction becomes the first direction, and the X-axis direction becomes the second direction.

In the embodiment, the extension member 430 is attached to the end protrusion 412a of the second plate portion 412, and connected to the side plate 500 at the position adjacent to the end protrusion 412a in the third direction. However, the extension member 430 may not be attached to the end protrusion 412a, or not be connected to the side plate 500 at the position adjacent to the end protrusion 412a. The second plate portion 412 may not include the end protrusion 412a.

In the embodiment, the side plate 500 is connected to the extension member 430 without overlapping with the second plate portion 412 in the first direction. However, the side plate 500 may be overlapped with the second plate portion 412 in the first direction and connected to the extension member 430.

In the embodiment, the extension member body 431 of the extension member 430 is smaller in thickness than the second plate portion 412 in the first direction, but may be larger in thickness than the second plate portion 412.

In the embodiment, the extension member 430 is attached to the second plate portion 412 without overlapping with the end plate body 410 and the reinforcing member 420 in the second direction. However, the extension member 430 may be disposed to overlap with the end plate body 410 and the reinforcing member 420 in the second direction by being bent in the first direction.

In the embodiment, the extension member connecting portion 432 of the extension member 430 is disposed at the position where at least a part of the extension member connecting portion 432 overlaps with the end protrusion 412a in the second direction. However, the extension member connecting portion 432 may not overlap with the end protrusion 412a.

In the embodiment, the extension member 430 includes the three extension member connecting portions 432 arranged in the third direction, but the number of the extension member connecting portions 432 is not particularly limited. Similarly, the numbers of the end protrusions 412a and the protrusion joints 440 of the end plate 400 and the numbers of the side protrusions 520, the side recesses 530, the through-holes 540, and the like of the side plate 500 are not particularly limited.

In the embodiment, the end protrusion 412a is disposed between any two of the plurality of extension member connecting portions 432. However, the end protrusion 412a may not be disposed between the two extension member connecting portions 432.

In the embodiment, the side recess 530 of the side plate 500 has the shape along the end protrusion 412a, but may not be along the end protrusion 412a.

In the embodiment, the end plate 400 includes one reinforcing member 420. However, the end plate 400 may have at least two reinforcing members 420 or may not have the reinforcing member 420.

In the embodiment, both the end plate 401 and the end plate 402 have the above configuration. However, either the end plate 401 or the end plate 402 may not have the above configuration. That is, at least one end plate 400 of the pair of end plates 400 may have the above configuration. Either of both ends in the first direction of the end plate 400 may not have the above configuration. The same applies to the side plate 500.

In the embodiment, the first spacer 301 is exemplified as the first spacer of the present invention, the second spacer 302 is exemplified as the second spacer of the present invention, and the third spacer 303 is exemplified as the third spacer of the present invention. However, depending on the number of the energy storage devices 210 installed, the first walls 312 of one first spacer 301 may overlap with each of the third walls 332 of the pair of third spacers 303. Fig. 9 is a schematic view illustrating an arrangement example of the first spacer 301 and the third spacer 303 according to a modification. Fig. 9 is a view corresponding to Fig. 8. As illustrated in Fig. 9, the pair of third spacers 303 is disposed so as to sandwich the pair of adjacent energy storage devices 210 and the first spacer 301 disposed between the pair of energy storage devices 210. In the third wall 332 of one of the pair of third spacers 303, the second member 338 overlaps with the first overlapping portion 316 of the first spacer 301. In the third wall 332 of the other third spacer 303, the first member 337 overlaps with the second overlapping portion 317 of the first spacer 301. That is, the third wall 332 of one of the third spacers 303 overlapping with the first overlapping portion 316 of the first spacer 301 can also be said to be the second wall of the present invention. In this case, one of the third spacers 303 is the example of the second spacer of the present invention.

In the embodiment, the first wall 312 is the flat plate-like member in which both surfaces in the X-axis direction are surfaces parallel to the YZ-plane. However, the first wall 312 may be a flat plate-like member in which at least a part of at least one surface in the X-axis direction is inclined from the YZ-plane. When the surface of the first wall 312 opposite to the second wall 322 as the inclined surface that is inclined so as to be away from the second wall 322 as being away from the first body 311, the inclined surface can be utilized as a guide when the first wall 312 and the second wall 322 are overlapped with each other. The first wall 312 having the flat plate shape includes the case where the first wall 312 includes such an inclined surface. The same applies to a surface of the first wall 312 opposite to the third wall 332.

In the embodiment, the case where the first overlapping portion 316 and the second overlapping portion 317 are disposed outside the second wall 322 and the third wall 332 has been exemplified. However, the first overlapping portion 316 and the second overlapping portion 317 may be disposed inside the second wall 322 and the third wall 332. Also in this case, the first overlapping portion 316 and the second overlapping portion 317 overlap with each other as viewed in the Y-axis direction, and the increase in size in the X axis direction of the energy storage apparatus 10 can be particularly prevented. One of the first overlapping portion 316 and the second overlapping portion 317 may be disposed outside one of the second wall 322 and the third wall 332, and the other of the first overlapping portion 316 and the second overlapping portion 317 may be disposed inside the other of the second wall 322 and the third wall 332.

In the embodiment, the case where the overall outer surface shape of the first wall 312, the second wall 322, and the third wall 332 is the uneven shape in which the first wall 312 forms the protrusion while the second wall 322 and the third wall 332 form the recess has been exemplified. However, the first wall 312 may form the recess, and the second wall 322 and the third wall 332 may have the uneven shape forming the protrusion. The overall outer surface shape of the first wall 312, the second wall 322, and the third wall 332 may be flat.

The energy storage unit 200 may not include the binding member (the end plate 400 and the side plate 500). When the energy storage device array 201 including the plurality of energy storage devices 210 can be bound by the outer case 100 from both sides in the alignment direction of the energy storage device array 201, the energy storage unit 200 may not include the binding member.

A form constructed by any combination of the components included in the embodiment and the modification example described above is also included in the scope of the present invention.

The present invention can be implemented not only as such the energy storage apparatus 10 but also as the end plate 400 or a combination of the end plate 400 and the side plate 500.

### INDUSTRIAL APPLICABILITY

The present invention can be applied to the energy storage apparatus including the energy storage device such as a lithium ion secondary battery.

### DESCRIPTION OF REFERENCE SIGNS

10: energy storage apparatus
100: outer case
110: outer case body
120: outer case lid
121: positive electrode external terminal
122: negative electrode external terminal
200: energy storage unit
201: energy storage device array
210: energy storage device
211: case
211a: bottom surface
211b: long side surface
211c: short side surface (outside surface)
211d: top surface
220: electrode terminal
230: gas release valve
300: spacer
301: first spacer
302: second spacer
303: third spacer
311: first body
312: first wall
314, 324, 334: protrusion
315: plate
316: first overlapping portion
317: second overlapping portion
321: second body
322: second wall
325, 335: first plate
326, 336: second plate
331: third body
332: third wall
337: first member
338: second member
400, 401, 402: end plate
410: end plate body
411: first plate portion
412: second plate portion
412a: end protrusion
420: reinforcing member
430: extension member
431: extension member body
432: extension member connecting portion
440: protrusion joint unit
500, 501, 502: side plate
500a: connecting member
510: side plate body
520: side protrusion
530: side recess
540: through-hole
600: bus bar
S1, S2: space
t1, t2, t3: thickness
W2, W3, W11, W12: protrusion length

### PREFERRED EXAMPLES

The invention is defined in the claims. However, below there is provided a non-exhaustive list of non-limiting examples ("Ex"). Any one or more of the features of these examples may be combined with any one or more features of another example, embodiment, or aspect described herein.
Example Ex 1. An energy storage apparatus comprising:
   an energy storage device including an electrode assembly in which plates are layered;
   a pair of end plates disposed at a position sandwiching the energy storage device in a layering direction of the plates; and
   a side plate connecting the pair of end plates,
   wherein at least one end plate of the pair of end plates includes:
      a plate portion opposed to a first direction; and
      an extension member that is attached to the plate portion to extend the plate portion in a second direction intersecting with the first direction, the extension member being connected to the side plate in the first direction.
Example Ex 2. The energy storage apparatus according to Example Ex 1, wherein the side plate is connected to the extension member without overlapping with the plate portion in the first direction.
Example Ex 3. The energy storage apparatus according to Example Ex 1 or 2, wherein the extension member has a thickness smaller than a thickness of the plate portion in the first direction.
Example Ex 4. The energy storage apparatus according to any one of Examples Ex 1 to Ex 3, wherein at least one of rigidity and tensile strength of the extension member is lower than that of the plate portion.
Example Ex 5. The energy storage apparatus according to any one of Examples Ex 1 to Ex 4, wherein the extension member is attached to the plate portion without overlapping with the plate portion in the second direction.
Example Ex 6. An energy storage apparatus comprising:
   a plurality of energy storage devices arranged in a second direction;
   an insulating first spacer disposed between a pair of adjacent energy storage devices;
   an insulating second spacer disposed at a position where one of the pair of energy storage devices is sandwiched between the second spacer and the first spacer; and
   an insulating third spacer disposed at a position where the other of the pair of energy storage devices is sandwiched between the third spacer and the first spacer,
   wherein the second spacer includes a second wall that covers an outside surface along the second direction in the one energy storage device,
   the third spacer includes a third wall that covers the outside surface along the second direction in the one energy storage device,
   the first spacer includes:
      a body disposed between the pair of energy storage devices; and
      a first wall that is provided at an end in a first direction intersecting the second direction in the body and extends along the second direction, and the first wall includes a first overlapping portion overlapping with the second wall and a second overlapping portion that is provided on a side opposite to the first overlapping portion in the body and overlaps with the third wall.
Example Ex 7. The energy storage apparatus according to Example Ex 6, wherein the first overlapping portion and the second overlapping portion are disposed outside the second wall and the third wall.
Example Ex 8. The energy storage apparatus according to Example Ex 7, wherein an entire outer surface shape of each of the first wall, the second wall, and the third wall is an uneven shape in which the first wall forms a protrusion and the second wall and the third wall form a recess.
Example Ex 9. The energy storage apparatus according to Example Ex 7 or Ex 8, wherein a thickness of the first wall is larger than each of thicknesses of the second wall and a thickness of the third wall.
Example Ex 10. The energy storage apparatus according to any one of Examples Ex 6 to Ex 9, wherein the first wall, the second wall, and the third wall cover an entire case of the energy storage device in a third direction intersecting the first direction and the second direction.

## Claims

1. An energy storage apparatus comprising:
a plurality of energy storage devices arranged in a second direction;
an insulating first spacer disposed between a pair of adjacent energy storage devices;
an insulating second spacer disposed at a position where one of the pair of energy storage devices is sandwiched between the second spacer and the first spacer; and
an insulating third spacer disposed at a position where the other of the pair of energy storage devices is sandwiched between the third spacer and the first spacer,
wherein the second spacer includes a second wall that covers an outside surface along the second direction in the one energy storage device,
the third spacer includes a third wall that covers the outside surface along the second direction in the one energy storage device,
the first spacer includes:
a body disposed between the pair of energy storage devices; and
a first wall that is provided at an end in a first direction intersecting the second direction in the body and extends along the second direction, and the first wall includes a first overlapping portion overlapping with the second wall and a second overlapping portion that is provided on a side opposite to the first overlapping portion in the body and overlaps with the third wall.

2. The energy storage apparatus according to the preceding claim, wherein the first overlapping portion and the second overlapping portion are disposed outside the second wall and the third wall.

3. The energy storage apparatus according to the preceding claim, wherein an entire outer surface shape of each of the first wall, the second wall, and the third wall is an uneven shape in which the first wall forms a protrusion and the second wall and the third wall form a recess.

4. The energy storage apparatus according to claim 2 or 3, wherein a thickness of the first wall is larger than each of thicknesses of the second wall and a thickness of the third wall.

5. The energy storage apparatus according to any one of the preceding claims , wherein the first wall, the second wall, and the third wall cover an entire case of the energy storage device in a third direction intersecting the first direction and the second direction.
